# EUROPEAN PATENT SPECIFICATION

(11) **EP 3 095 577 B1**
(45) Date of publication and mention of the grant of the patent: **26.07.2023**
(21) Application number: 15737301.0
(22) Date of filing: 16.01.2015
(51) Int. Cl.: B29C 39/12, B29C 39/10, B29C 39/40, B29K 101/10, B29K 105/08, B29C 70/48

(54) **PROCESS FOR PRODUCING A COATED FIBER-REINFORCED RESIN MOLDED ARTICLE**
VERFAHREN ZUR HERSTELLUNG EINES BESCHICHTETEN FASERVERSTÄRKTEN HARZFORMKÖRPERS
PROCÉDÉ DE FABRICATION D'UN ARTICLE REVÊTU MOULÉ EN RÉSINE RENFORCÉE PAR DES FIBRES

(30) Priority: 17.01.2014 JP 2014006939
(43) Date of publication of application: 23.11.2016
(73) Proprietor: Toray Industries, Inc., Tokyo 103-8666 (JP)
(72) Inventor: TAKEMOTO, Hidehiro, Nagoya-shi Aichi 455-8502 (JP); TSUJI, Seiji, Nagoya-shi Aichi 455-8502 (JP); KITAGAWA, Masashi, Nagoya-shi Aichi 455-8502 (JP); MIYAGAWA, Yuji, Nagoya-shi Aichi 455-8502 (JP)
(74) Representative: Hoefer & Partner Patentanwälte mbB
(86) International application number: PCT/JP2015/000175
(87) International publication number: WO 2015/107903

(56) References cited:
- JP-A- H07 223 231
- JP-A- 2008 143 077
- JP-A- 2010 194 863
- JP-A- 2013 209 510
- US-A- 4 081 578
- US-A- 5 580 621
- US-A- 5 993 906

## Description

### Technical Field

The present application claims priority from Japanese Patent Application No. 2014-6939 filed on January 17, 2014.

The present invention relates to a manufacturing method of a coated fiber-reinforced resin molded article. More specifically the invention relates to a manufacturing method of a coated fiber-reinforced resin molded article having a coating layer provided as a surface layer to significantly reduce the surface irregularity of the molded article caused by the configuration of a reinforcing fiber and the shrinkage of a resin material and thereby provide excellent surface quality.

### Background Art

The fiber-reinforced plastic (FRP) material, especially CFRP using carbon fiber has light weight and excellent mechanical properties and has thus been increasingly applied to transportation equipment in recent years. Especially in applications that need the excellent appearance in addition to the mechanical properties, for example, in an application of automobile exterior components, CFRP is required to have a smooth surface without any defect.

A sheet molding compound (SMC) molding process and a bulk molding compound (BMC) molding process are often employed as the manufacturing method of fiber-reinforced resin molded articles in such applications. In recent years, resin transfer molding (RTM) process has attracted attention and has been increasingly employed. The resin transfer molding (RTM) process enables the reinforcing fiber to be used in the form of continuous fiber, provides the extremely good mechanical properties and has a short cycle time for molding and thereby excellent productivity.

The fiber-reinforced resin molded article produced by any of these molding processes, however, often has a defect caused by resin filling defect on the surface or surface irregularity caused by the configuration of a reinforcing fiber and the shrinkage of a resin and thereby has lower surface smoothness compared with conventionally used metal components. In order to solve this problem, there is a need to coat the surface of the fiber-reinforced resin molded article after being mended and polished. This may result in increasing the work time. Even such treatment may fail to provide the sufficient surface smoothness. Especially the fiber-reinforced resin molded article having a large surface area or having a complicated shape such as a curved surface or a perpendicularly bent surface requires a long time for mending and polishing.

A method described below has been proposed to solve these problems (Patent Document 1). The method places a fiber reinforcing material in a heated mold, subsequently injects a matrix resin into a cavity of the mold to make the fiber reinforcing material impregnated with the matrix resin, and cures the matrix resin to a level that withstands an injection pressure of a composition for coating a fiber-reinforced resin molded article described below, so as to obtain a fiber-reinforced resin-impregnated body. The method subsequently injects a composition for coating a fiber-reinforced resin molded article (i.e., a resin different from the matrix resin) between the surface of the fiber-reinforced resin-impregnated body and the surface of the mold. After completion of injection, the mold is clamped again to cure the composition for coating the fiber-reinforced resin molded article. This provides the fiber-reinforced resin molded article with shielding the fiber texture and pinholes on the surface of the molded article.

Patent Document 2 discloses a method of manufacturing a composite molded structure, and Patent Document 3 discloses a method of applying an in-mold coating composition.

### Prior Art Documents

### Patent Documents:

Patent Document 1: JP 2013-209510A
Patent Document 2: US 5,580,621
Patent Document 3: US 4,081,578

### Summary of the Invention

### Problems to be Solved by the Invention

This method forms a composition coating on the surface and thereby eliminates the surface defect such as pinholes caused by filling defect of the matrix resin. This method, however, fails to sufficiently reduce the surface irregularity caused by the configuration of a reinforcing fiber base material and the shrinkage of an entire surface layer resin comprised of a matrix resin and a coating resin. This is because the surface irregularity caused by the configuration of the reinforcing fiber base material and the shrinkage of the entire surface layer resin significantly depends on the thickness of the resin layer of the entire surface layer resin during curing and the heat shrinkage of the entire surface layer resin according to a difference between the curing temperature of the resin and the ordinary temperature.

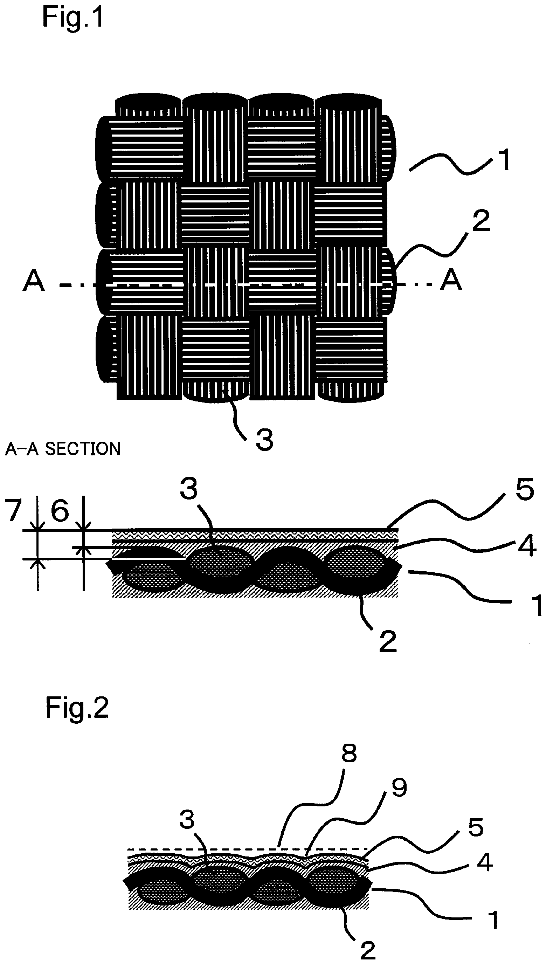

The surface irregularity is described with reference to Fig. 1 that illustrates a coated fiber-reinforced resin molded article immediately after removal from a mold. In this illustrated example, a woven fabric base material 1 is used as the reinforcing fiber base material for at least a surface layer. According to the woven structure of reinforcing fiber bundles, concaves are formed at intersections of texture at which a weft thread 2 crosses a warp thread 3 as shown in an A-A sectional view. In other words, the surface of the base material has irregularity. This results in providing non-uniform thickness of the entire surface layer resin of the coated fiber-reinforced resin molded article (i.e., the total thickness of a matrix resin 4 and a coating resin 5 in the surface layer portion) between a smoothly-processed surface of the mold and the woven fabric base material. More specifically, convex portions in the irregularity of the woven fabric base material provide the small thickness of the entire surface layer resin (thickness shown by numeral 6 in Fig. 1), while concave portions (intersections of texture ) provide the large thickness of the entire surface layer resin (thickness shown by numeral 7 in Fig. 1).

Even when the smoothly-processed surface morphology of the mold is transferred during curing of the coating resin, both the matrix resin 4 and the coating resin 5 have heat shrinkage in the process of removing the molded article from the mold and cooling down the molded article. The portion providing the small thickness of the entire surface layer resin has a small absolute value of heat shrinkage and accordingly has a little surface change, while the portion providing the large thickness of the entire surface layer resin has a significant surface change. As a result, the fiber-reinforced resin cooled down to ordinary temperature has surface irregularity as shown in Fig. 2. In Fig. 2, a surface position 8 denotes the position of the surface of a coated fiber-reinforced resin molded article prior to heat shrinkage, and a surface position 9 denotes the position of the surface of the coated fiber-reinforced resin molded article after heat shrinkage.

The prior art method forms the coating composition at the same temperature as the temperature of molding the fiber-reinforced resin molded article. The coating composition formed at this temperature provides irregularity due to heat shrinkage of the resin when the coating composition is cooled down to ordinary temperature. The disclosure of Patent Document 1 does not provide a fundamental solution to reduce the surface irregularity of the fiber-reinforced resin molded article by coating the fiber-reinforced resin molded article with the coating composition. Techniques for remarkably shortening the cycle time to enhance the productivity have been developed recently. For this purpose, a process employed often increases the curing temperature of the matrix resin and the coating resin to shorten the curing time of the matrix resin and the coating resin. This further increases the surface irregularity.

An object is to provide a manufacturing method of a fiber-reinforced resin that significantly reduces surface irregularity caused by a temperature difference between a molding temperature (curing temperature) and ordinary temperature in the course of molding the fiber-reinforced resin. Means for Solving the Problems
(1) According to the invention, there is provided a manufacturing method of a coated fiber-reinforced resin molded article according to claim 1. The manufacturing method comprises: a first molding process that cures a matrix resin which a reinforcing fiber is impregnated with at a temperature T1(°C) to obtain a fiber-reinforced resin molded article; and a second molding process that places the fiber-reinforced resin molded article in a cavity of a mold, sets the cavity to a temperature T2(°C) that is lower than the temperature T1(°C), injects a liquid coating layer-forming resin material into the cavity such as to coat at least part of a surface layer of the fiber-reinforced resin molded article, and cures the coating layer-forming resin material at the temperature T2(°C), so as to obtain the coated fiber-reinforced resin molded article, wherein the mold is comprised of at least two pieces and has the cavity in a shape that is approximately same as a shape of the fiber-reinforced resin molded article.
(2) In this manufacturing method of the coated fiber-reinforced resin molded article of the invention, one preferable aspect performs the first molding process and the second molding process using different molds. This aspect significantly reduces the surface irregularity of the coated fiber-reinforced resin molded article. This aspect also enables even a complicated shape of the fiber-reinforced resin molded article having a curved surface, a perpendicularly bent surface or the like to be coated in a uniform thickness.
   In the manufacturing method of the coated fiber-reinforced resin molded article of the invention described above, another preferable aspect causes a portion of the fiber-reinforced resin molded article on which a coating layer is to be formed, to be subjected to a treatment for enhancing the adhesiveness to the coating layer after the first molding process and subsequently performs the second molding process. This aspect also significantly reduces the surface irregularity of the coated fiber-reinforced resin molded article.
(3) According to the invention, in the manufacturing method of the coated fiber-reinforced resin molded article of the invention, a difference between the temperature T1(°C) and the temperature T2(°C) is set to be equal to or greater than 30°C. This aspect significantly reduces the surface irregularity of the coated fiber-reinforced resin molded article.
(4) According to another preferable aspect in the manufacturing method of the coated fiber-reinforced resin molded article of the invention, the temperature T2(°C) is set to be lower than 80°C. This aspect significantly reduces the surface irregularity of the coated fiber-reinforced resin molded article.
(5) In the manufacturing method of the coated fiber-reinforced resin molded article of the invention described above, another preferable aspect uses a thermosetting resin for the matrix resin. This aspect significantly reduces the surface irregularity of the coated fiber-reinforced resin molded article.
(6) In this manufacturing method of the coated fiber-reinforced resin molded article of the invention, another preferable aspect uses a thermosetting resin for the coating layer-forming resin material. This aspect significantly reduces the surface irregularity of the coated fiber-reinforced resin molded article.
(7) According to another preferable aspect in the manufacturing method of the coated fiber-reinforced resin molded article of the invention described above, thickness of the coating layer is set to a range of 50 µm to 600 µm. This aspect significantly reduces the surface irregularity of the coated fiber-reinforced resin molded article.
   In the manufacturing method of the coated fiber-reinforced resin molded article of the invention described above, the first molding process places the reinforcing fiber in a cavity defined by at least two mold pieces and injects and subsequently cures a liquid matrix resin to obtain a first fiber-reinforced resin molded article. This significantly reduces the surface irregularity.
(8) A coated fiber-reinforced resin molded article having significantly reduced surface irregularity may be manufactured by the manufacturing method according to any of the aspects described above.
(9) According to another aspect, there is provided a coated fiber-reinforced resin molded article that is configured to include a fiber-reinforced resin base material comprised of at least a carbon fiber woven fabric and a resin (A), and a coating layer, wherein the coating layer is stacked on the fiber-reinforced resin base material that has a concave of a certain depth, and the fiber-reinforced resin base material has a sectional configuration that satisfies a relationship of Db/Da ≤ 0.7, where Da (µm) denotes depth of a concave shape formed in the fiber-reinforced resin base material and Db (µm) denotes depth of a concave shape formed in the coating layer. Satisfying this relationship significantly reduces the surface irregularity of the coated fiber-reinforced resin molded article.
(10) According to one preferable aspect of the coated fiber-reinforced resin molded article, the coating layer is formed from a single layer of a thermosetting resin (B). This aspect enables a coating to be formed at once without providing a plurality of molds.
(11) According to another preferable aspect of the coated fiber-reinforced resin molded article, a surface of the coating layer is further coated with clear coating. This aspect further improves the design effect.
(12) According to another preferable aspect of the coated fiber-reinforced resin molded article, the coated fiber-reinforced resin molded article having a surface coated with clear coating such that wave scan values of short wave (SW) and long wave (LW) on the surface satisfy a relationship of SW≤ 20 and LW≤ 8. This aspect meets the class A that is an index of the surface quality of automobile components.
(13) According to another preferable aspect of the coated fiber-reinforced resin molded article, the carbon fiber woven fabric is at least one woven fabric selected from the group consisting of a plain woven fabric, a twill woven fabric and a satin woven fabric. This aspect further improves the design effect.
(14) According to another preferable aspect of the coated fiber-reinforced resin molded article, the resin (A) of the fiber-reinforced resin base material has a glass transition temperature (Tg(°C)) that satisfies Tg≥ 100°C. This aspect meets the heat resistance required for automobile components.

### Advantageous Effects of the Invention

The invention provides a manufacturing method of a coated fiber-reinforced resin molded article configured to have significant reduction of the surface irregularity of the molded article caused by the configuration of reinforcing fibers.

### Brief Description of the Drawings

[Figure 1] Fig. 1 is schematic diagrams schematically illustrating the state of thickness of an entire surface layer resin immediately after removal of a coated fiber-reinforced resin molded article using a woven fabric base material as a reinforcing fiber, from a mold;
[Figure 2] Fig. 2 is a schematic sectional view illustrating surface irregularity of a coated fiber-reinforced resin molded article having a coating layer formed on the surface by a conventional general method;
[Figure 3] is a schematic sectional view illustrating surface irregularity of a coated fiber-reinforced resin molded article having a coating layer formed on the surface by a method of the invention;
[Figure 4] Fig. 4 is a schematic sectional view of a manufacturing apparatus schematically illustrating a molding process of a fiber-reinforced resin by RTM method according to an embodiment of the invention;
[Figure 5] Fig. 5 is a schematic sectional view of a manufacturing apparatus schematically illustrating a process of forming a coating layer on the surface of the fiber-reinforced resin molded article according to the embodiment of the invention;
[Figure 6] Fig. 6 is a schematic diagram illustrating an improvement rate of surface irregularity defined by the invention; and
[Figure 7] Fig. 7 is schematic diagrams illustrating measurement locations of the improvement rate of surface irregularity defined by the invention.

### Mode for Carrying Out the Invention

The following describes embodiments of the invention in detail, although the invention is not limited to these embodiments but to the scope of the claims.

A manufacturing method of a coated fiber-reinforced resin molded article according to an embodiment includes a first molding process that cures a matrix resin which a reinforcing fiber is impregnated with at a temperature T1(°C) to obtain a fiber-reinforced resin molded article; and a second molding process that places the fiber-reinforced resin molded article in a cavity of a mold, sets the cavity to a temperature T2(°C) that is lower than the temperature T1(°C), injects a liquid coating layer-forming resin material into the cavity such as to coat at least part of a surface layer of the fiber-reinforced resin molded article, and cures the coating layer-forming resin material at the temperature T2(°C), so as to obtain the coated fiber-reinforced resin molded article, wherein the mold is comprised of at least two pieces and has the cavity in a shape that is approximately same as a shape of the fiber-reinforced resin molded article.

The first molding process cures the matrix resin which the reinforcing fiber is impregnated with at the temperature T1(°C) to obtain the fiber-reinforced resin molded article. The advantageous effects of the invention are not only achieved by using a limited range of reinforcing fibers, but may be achieved by using any of various reinforcing fibers. Carbon fibers and glass fibers are generally used as the reinforcing fiber. Especially carbon fibers are preferable to provide a fiber-reinforced resin molded article that has light weight, high strength and high rigidity. Using a continuous fiber form of the reinforcing fiber ensures the higher mechanical properties.

The application of using the reinforcing fiber in a continuous fiber form may appropriately use any of various reinforcing fiber base materials: for example, (i) a UD material (unidirectional material) formed by arraying reinforcing fibers in one direction; (ii) an NCF material (non-crimp fabric material) formed by stacking multiple layers of reinforcing fibers arrayed in one direction, in the same direction or in a different direction and forming the multi-layered reinforcing fibers into a sheet with a stitch yarn; and (iii) a woven fabric using reinforcing fibers. Staking multiple layers of the reinforcing fiber base material provides a fiber-reinforced resin molded article having the higher mechanical properties. In this case, the array direction of the reinforcing fibers may be designed and arranged appropriately.

In a product produced by making the reinforcing fiber base material itself visible from outside without color coating the fiber-reinforced resin molded article, the commercial value of the molded article is especially of importance. In this case, a woven fabric such as a plain woven fabric, a twill woven fabric or a satin woven fabric may be preferably used, since the unique pattern expressed by the woven structure has excellent design effect. The weight per unit area of the base material also affects the design effect. It is preferable to use about 100 g/m2 to 300 g/m2 of the base material for a product in which the woven structure is visible from outside. The coating is preferably clear coating to make the reinforcing fiber base material visible.

In the case where the UD material is used for a three-dimensional solid configuration that is often required as the practical product configuration, alignment of the reinforcing fibers arrayed in one direction to the configuration is likely to cause gaps and cracks between the reinforcing fibers or overlaps of the reinforcing fibers and result in providing the non-uniform overall thickness of the surface layer resin. Employing the manufacturing method according to the embodiment, however, ensures the sufficient advantageous effects of the invention.

In the case of using the NCF material, the stitch yarn is generally likely to provide the non-uniform overall thickness of the surface layer resin. Employing the manufacturing method according to the embodiment, however, provides the effect of reducing the surface irregularity.

Both thermoplastic resins and thermosetting resins may be applied to the matrix resin appropriately. Using a thermosetting resin such as unsaturated polyester resin, epoxy resin, phenolic resin or polyurethane resin for the matrix resin preferably provides a fiber-reinforced resin molded article having the excellent mechanical properties. In terms of the heat resistance, the glass transition temperature (Tg) of the matrix resin is preferably not lower than 100°C. The glass transition temperature (Tg) of the matrix resin is more preferably not lower than 120°C. The glass transition temperature of the matrix resin is a midpoint glass transition temperature obtained by a differential scanning calorimeter when the temperature of the matrix resin is rapidly decreased in an inert gas atmosphere with liquid nitrogen at a temperature decrease rate of 150°C/ minute and is subsequently increased at a temperature rise rate of 20°C/ minute. The midpoint glass transition temperature is determined in conformity with a method defined in JIS K7121-1987 as the temperature at an intersection between an equidistant straight line in the vertical axis direction from respective extensions of a lower temperature-side base line and a higher temperature-side base line and a glass transition step-like change curve.

A molding method employable in the first molding process may be, for example, (i) an SMC molding method that forms an intermediate base material into a predetermined shape using a mold with application of pressure and heat, wherein the intermediate base material is obtained by impregnating reinforcing fiber bundles cut to appropriate lengths with a thermosetting resin and subsequently forming the resin-impregnated fiber bundles into a sheet; (ii) a BMC molding method that forms a bulk intermediate material into a predetermined shape using a mold with application of pressure and heat, wherein the bulk intermediate material is obtained by mixing reinforcing fiber bundles cut to appropriate lengths with a thermosetting resin and a filler; (iii) a prepreg molding method that stacks and arranges multiple layers of a prepreg in a mold and press-forms the multi-layered prepreg with application of pressure and heat, hot-forms the multi-layered prepreg in vacuum or forms the multi-layered prepreg in an autoclave with application of pressure and heat, wherein the prepreg is an intermediate base material having reinforcing fiber bundles aligned in parallel or woven to a sheet and impregnated with a matrix resin; and (iv) a liquid compression method that supplies a liquid matrix resin on a reinforcing fiber base material such as woven fabric or NCF placed on one mold piece of a double-sided mold and closes the double-sided mold with application of pressure and heat.

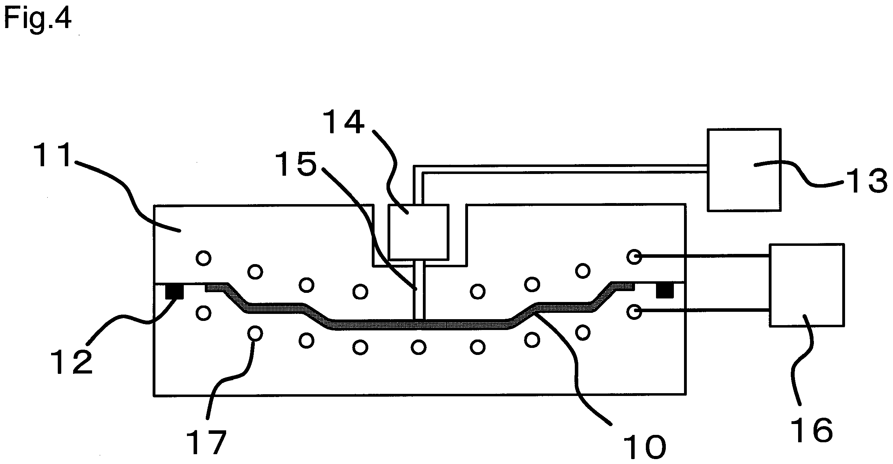

Especially an RTM method (resin transfer molding method) shown in Fig. 4 is preferably employed to satisfy both the short cycle time and the high mechanical properties. In the illustrated example of Fig. 4, a mold 11 is comprised of at least two pieces. A mold seal 12 is a portion used for sealing the mold. The mold 11 is controlled to a predetermined temperature by a mold temperature controller 16. For example, the mold temperature controller 16 may flow a heat medium through a heat medium passage 17 and regulate the temperature of the heat medium to control the temperature of the mold 11. The RTM method first stacks and arranges multiple layers of a reinforcing fiber base material in a predetermined orientation in a cavity of the mold 11 at the temperature controlled by the mold temperature controller 16 and clamps the mold 11. The RTM method subsequently controls a matrix resin injection passage open-close mechanism 14 to inject a liquid matrix resin from a matrix resin injection passage 15 that is provided to communicate with the cavity, into the cavity with application of pressure using a matrix resin injector 13 placed outside of the mold 11 and causes the multi-layered reinforcing fiber base material to be impregnated with the matrix resin. The RTM method then cures the matrix resin in the mold heated to a temperature T1(°C) by the mold temperature controller 16 to mold a fiber-reinforced resin molded article 10. The RTM method finally opens the mold 11 to take out the fiber-reinforced resin molded article.

According to the embodiment of the invention, the advantageous effects are, however, not limited to this molding method employed in the first molding process but may be provided by any of various other molding methods.

In the first molding process, the matrix resin on the surface portion of the fiber-reinforced resin molded article is in close contact with the mold 11 and receives heat from the mold 11 to be cured at the temperature T1(°C). The matrix resin is pressed against the mold during curing, so that a smoothly-processed mold surface is transferred to the surface of the fiber-reinforced resin molded article immediately after curing. When the fiber-reinforced resin molded article is taken out of the mold at the temperature T1(°C) and is cooled down to ambient temperature, the irregularity caused by the weave pattern of the reinforcing fiber bundles constituting the reinforcing fiber base material provides thicker portions and thinner portions in a matrix resin layer as a surface layer of the fiber-reinforced resin molded article, as described above. This results in providing different absolute amounts of heat shrinkage of the resin layer and thereby causes irregularity on the surface of the fiber-reinforced resin molded article.

The second molding process forms a coating layer as the surface layer of the fiber-reinforced resin obtained in the first molding process, so as to provide a coated fiber-reinforced resin molded article.

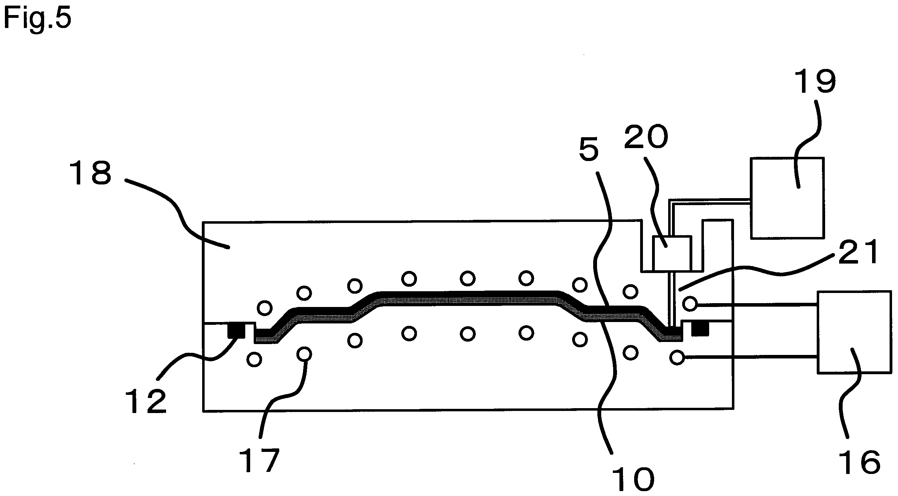

The second molding process is described with reference to Fig. 5. A mold 18 is comprised of at least two pieces. A mold seal 12 is used for sealing the mold. A coating layer-forming resin material injection passage 21 is provided in the mold 18. An injection passage open-close mechanism 20 provided in the middle of the coating layer-forming resin material injection passage 21 changes over between the ejection state and the stop state of a coating layer-forming resin material.

As shown in Fig. 5, the mold used in the second molding process is the mold 18 having a cavity in a shape that is approximately the same as the shape of the fiber-reinforced resin molded article 10 obtained in the first molding process. The mold is controlled to a predetermined temperature by a mold temperature controller 16. For example, the mold temperature controller 16 may flow a heat medium through a heat medium passage 17 and regulate the temperature of the heat medium to control the temperature of the mold. The second molding process controls a coating layer-forming resin material injection passage open-close mechanism 20 to eject the liquid coating layer-forming resin material from a coating layer-forming resin material ejection device 19 placed outside of the mold and supply the liquid coating layer-forming resin material into the cavity. It is preferable to inject the coating layer-forming resin material after the pressure in the mold 18 is reduced to a level that does not reach the vapor pressure of the coating layer-forming resin material. The "shape that is approximately the same" means almost the same overall shape with some difference in shape to provide a space for forming a coating layer on the fiber-reinforced resin molded article as described later. The second molding process forms a coating layer 5 on the fiber-reinforced resin molded article 10.

The first molding process and the second molding process may use the same mold or may use different molds. In the case where the first molding process and the second molding process use the same mold, the first molding process controls the temperature of the mold to T1(°C), and the second molding process is performed after the temperature of the mold is decreased from T1(°C) to T2(°C). Some time period may thus be required for such temperature control. The second molding process injects the liquid coating layer-forming resin material to coat at least part of the surface layer of the fiber-reinforced resin molded article. Accordingly, in the case where the first molding process and the second molding process use the same mold, the cavity of the two-piece mold may be expanded by 0.1 to several mm or may be provided with a space for forming a coating layer by the pressure of the injected coating layer-forming resin material by slightly reducing the clamping force of the mold compared with the first molding process.

In the case where the second molding process uses a different mold from a mold in the first molding process, on the other hand, the mold used in the first molding process is set to the temperature T1(°C) and the mold used in the second molding process is set to the temperature T2(°C), so that there is no need to control the temperature. This preferably shortens the cycle time. Additionally, the mold used in the second molding process may be processed in advance into a suitable shape. This provides a space for forming a coating layer in at least part of the fiber-reinforced resin molded article with high accuracy. For example, simply reducing the clamping force may fail to provide a sufficient space on a surface having a small angle between the open-close direction of the mold and the direction of expanding the cavity. Processing the mold in advance into a suitable shape, however, enables a necessary and sufficient space to be formed even on such a surface with high accuracy and preferably allows for formation of a coating layer of uniform film thickness. It is preferable to use different molds especially when the angle of the open-close direction of the mold to the surface of the fiber-reinforced resin molded article is within 30 degrees.

In the second molding process, the temperature of the mold 18 is controlled to the temperature T2(°C) that is lower than the temperature T1(°C). In this state, the fiber-reinforced resin molded article 10 obtained in the first molding process is placed in the cavity of the mold. A space of a predetermined area and a predetermined thickness is provided between the fiber-reinforced resin and the mold for a portion where the coating layer 5 is to be formed on the fiber-reinforced resin molded article.

The fiber-reinforced resin molded article 10 placed in the cavity of the mold 18 in the second molding process has the surface irregularity caused by heat shrinkage of the resin on the surface of the molded article as described above. The coating layer-forming resin material is injected from the coating layer-forming resin material ejection device 19 through the coating layer-forming resin material injection passage 21 provided in the mold into the cavity with application of pressure. The mold side (cavity side) is smoothly processed, while the fiber-reinforced resin molded article side has irregularity. Accordingly a coating layer is formed in non-uniform thickness, and the coating layer-forming resin material is cured at the temperature T2(°C). Continuing injection of the coating layer-forming material for a certain time period even after the material is filled in the mold and starts curing shrinkage suppresses deterioration of the surface quality caused by the curing shrinkage of the coating layer-forming material.

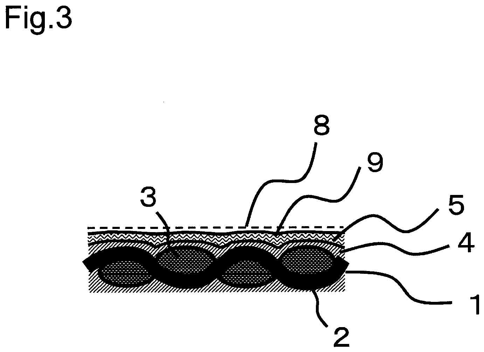

When the coated fiber-reinforced resin molded article is removed from the mold and is cooled down to ambient temperature, both the matrix resin layer and the coating layer have heat shrinkage. The difference between the temperature T2(°C) and the ordinary temperature is smaller than the difference between the temperature T1(°C) and the ordinary temperature. This provides the smaller amount of heat shrinkage. The surface irregularity of the coated fiber-reinforced resin molded article obtained by the second molding process is less than the surface irregularity of the fiber-reinforced resin molded article prior to formation of the coating layer as shown in Fig. 3. Accordingly the coated fiber-reinforced resin molded article shown in Fig. 3 is a coated fiber-reinforced resin molded article that is configured to include a fiber-reinforced resin base material comprised of at least a carbon fiber woven fabric and a resin (A), and a coating layer, wherein the coating layer is stacked on the fiber-reinforced resin base material that has a concave of a certain depth, and the fiber-reinforced resin base material has a sectional configuration that satisfies a relationship of Db/Da ≤ 0.7, where Da (µm) denotes depth of a concave shape formed in the fiber-reinforced resin base material and Db (µm) denotes depth of a concave shape formed in the coating layer.

In order to further reduce the surface irregularity, the difference between the temperature T1(°C) of curing the matrix resin in the first molding process and the temperature T2(°C) of curing the coating layer in the second molding process is equal to or greater than 30°C. In other words, setting the temperature T2(°C) to be lower than the temperature T1(°C) by 30°C or greater ensures the sufficient effect of reducing the surface irregularity of the coated fiber-reinforced resin molded article. The difference between the temperature T1(°C) of curing the matrix resin in the first molding process and the temperature T2(°C) of curing the coating layer in the second molding process is preferably equal to or greater than 40°C and is more preferably equal to or greater than 50°C.

The temperature T2(°C) of lower than 80°C provides the less heat shrinkage of the resin when the resin is cooled down to ambient temperature after formation of the coating layer, compared with the temperature T2(°C) of not lower than 80°C. This preferably results in reducing the surface irregularity of the coated fiber-reinforced resin molded article to almost ignorable level. Further decreasing the temperature T2 leads to further reduction of the surface irregularity. In the case where further surface smoothness is required, the coating layer-forming resin material employed may have the lower curing temperature, or the molding method employed may have the longer curing time to sufficiently cure the resin even at low temperature. The temperature T2(°C) is more preferably not higher than 60°C and is furthermore preferably not higher than 50°C.

It is desirable that the coating layer-forming resin material is cured quickly at low temperature, has excellent adhesiveness to the fiber-reinforced resin molded article as the base and has low viscosity to allow for efficient injection into a narrow space. From these points of view, a thermosetting resin is preferably used as the coating layer-forming resin material. Preferable examples of the thermosetting resin include unsaturated polyester resin, epoxy resin, phenolic resin and polyurethane resin.

The coating layer may be provided as a colored coating film that improves the appearance design effect or may be provided as a base layer that is to be further painted in a subsequent process.

The coating layer-forming resin material may be specialized in the properties suitable for improving the surface irregularity of the coated fiber-reinforced resin molded article, unlike the matrix resin that is significantly involved in the mechanical properties of the fiber-reinforced resin molded article. Various modifications and applications may thus be allowed. For example, inorganic particles may be mixed with the coating layer-forming resin material, in order to disperse the stress accompanied with shrinkage or to reduce the linear expansion coefficient and cure shrinkage. Various additives such as a color pigment, an antistatic agent, an ultraviolet absorber, a light stabilizer, an antioxidant, a polymerization inhibitor, a curing accelerator, a pigment dispersant, an antifoam agent, a plasticizer and a flame retardant may be mixed with the coating layer-forming resin material as appropriate.

The coating layer of the coated fiber-reinforced resin molded article according to the embodiment of the invention preferably has the thickness of not less than 50 µm and more preferably has the thickness of not less than 100 µm. The coating layer of the coated fiber-reinforced resin molded article according to the embodiment of the invention is also preferably formed to have the thickness of not greater than 600 µm and more preferably has the thickness of not greater than 500 µm. The thickness of not less than 50 µm makes the coating layer unlikely to have any missing part and readily provides the effect of reducing the surface irregularity of the coated fiber-reinforced resin molded article. The thickness of not greater than 600 µm, on the other hand, suppresses an increase in weight of the coating layer and readily provides the advantageous characteristics, i.e., light weight and excellent mechanical properties, of the fiber-reinforced resin molded article.

In the coated fiber-reinforced resin molded article according to the embodiment of the invention, it is preferable to cause at least a surface of the molded article after the first molding process which is to be coated with a surface layer in the second molding process to be subjected to surface treatment for the purpose of enhancing the adhesiveness of the coating layer-forming resin material. The fiber-reinforced resin molded article after the first molding process may have insufficient adhesiveness to the coating layer, due to a mold release agent that is applied on the mold for the purpose of readily removing the molded article from the mold and is transferred to the surface of the molded article or due to an internal mold release agent added to the matrix resin.

The fiber-reinforced resin molded article is removed from the mold after the first molding process. At least a surface of the fiber-reinforced resin molded article on which a coating layer is to be formed may be polished with a polishing agent or the like to remove the matrix resin and the mold release agent from the surface of the fiber-reinforced resin molded article or may be subjected to surface treatment for chemically enhancing the adhesiveness. For example, a surface of the fiber-reinforced resin layer that is subjected to pretreatment for enhancing the adhesiveness to the coating layer may be polished with sandpaper or the like for removal of the outermost layer or for formation of the polishing trace, prior to the second molding process. This reduces the irregularity of the molded article to be less than the irregularity caused by fibers.

The coating layer is preferably a single layer. This configuration does not need to provide a plurality of coating molds and enables the coating layer to be formed in one step.

The advantageous effect of the invention may be evaluated by quantification of the surface irregularity. A typical method of quantification may use a surface roughness meter or may observe a section of the coated fiber-reinforced resin with a microscope or the like. For example, the surface irregularity may be quantified from a maximum ridge height (Pt) using a contact-type surface roughness meter or may be quantified from a section using a microscope. In the case where an interface between the coating agent and the fiber-reinforced resin molded article is unclear, X-ray fluorescence analysis, SEM or the like may be employed.

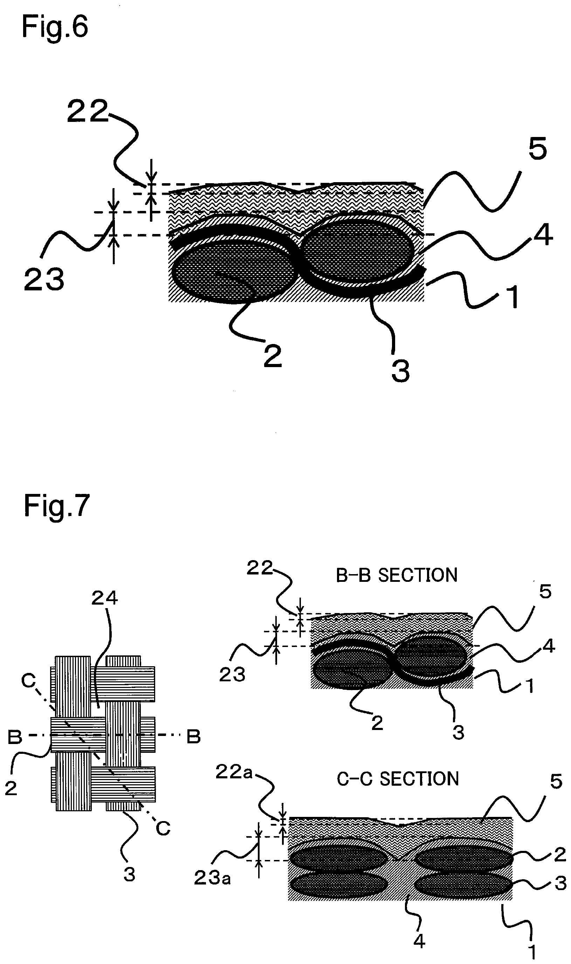

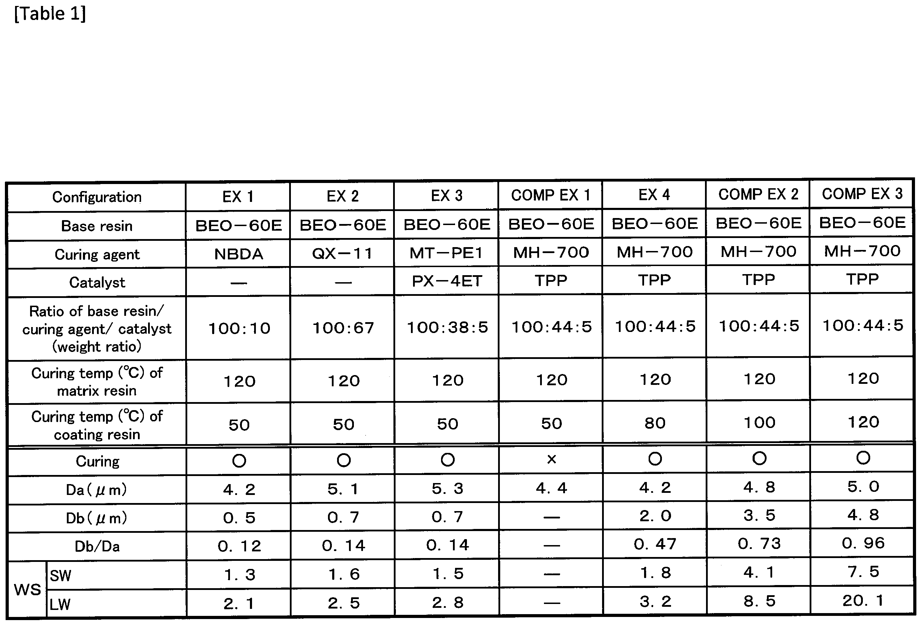

The coated fiber-reinforced resin molded article according to the embodiment has Db/Da of not greater than 0.7, where Db (µm) denotes the amount of surface irregularity of the coated fiber-reinforced resin molded article determined by any of the above methods and Da (µm) denotes the amount of surface irregularity of the fiber-reinforced resin molded article. Db/Da is preferably not greater than 0.5. Satisfying this relationship can reduce the number of times of polishing the coating surface required in the middle of coating multiple layers in the case where the surface of the coated fiber-reinforced resin molded article is subjected to ordinary painting process. Db (µm) and Da (µm) may be (i) measured from a section that is along a direction in which a weft thread 2 or a warp thread 3 is extended as shown in Fig. 6 or may be (ii) measured from a section that is along a direction in which the weft thread 2 or the warp thread 3 is extended (B-B section, identical with Fig. 6) or a section that passes through a void portion 24 surrounded by the weft thread 2 and the warm thread 3 (C-C section) when there is a clearance between threads as shown in Fig. 7. In the section of Fig. 6 and the B-B section of Fig. 7, the surface irregularity Db (µm) of the coated fiber-reinforced resin molded article is defined by a distance 22, and the surface irregularity Da (µm) of the fiber-reinforced resin molded article is defined by a distance 23. In the C-C section of Fig. 7, the surface irregularity Db (µm) of the coated fiber-reinforced resin molded article is defined by a distance 22a, and the surface irregularity Da (µm) of the fiber-reinforced resin molded article is defined by a distance 23a.

In evaluation of the invention, when a product has a certain degree or higher glossiness, the glossiness may be measured by using a wave scanner (Wave Scan) that is capable of quantifying the mapping sharpness or the phenomenon that wave is observed on the coating surface (called orange peel). In automobile application, the best surface condition is called "class A". The "class A" has no uniform standards but generally has a short wave (SW) that denotes the amount of surface irregularity by the small pitches, of not higher than 20 and a long wave (LW) that denotes the amount of surface irregularity by the large pitches, of not higher than 8. Preferably SW is not higher than 20 and LW is not higher than 4. These figures are values with regard to a product obtained by painting the coated fiber-reinforced resin molded article manufactured as described above.

A product using the molded article manufactured according to the embodiment of the invention is preferably a component having a large surface area. More specifically, the surface area of the product is preferably not less than 900 cm² and is more preferably not less than 8000 cm². The larger surface area shortens a polishing time for base polishing or surface smoothing, suppresses generation of powder dust during the polishing work and provides the excellent design effect by simple work.

A coated fiber-reinforced resin molded article may be manufactured by the method described above.

### Examples

The following describes the invention with reference to examples, although the invention is not limited to these examples but to the scope of the claims.

### [Molding apparatus]

* 100-ton pressing machine (manufactured by YAMAMOTO ENG. WORKS Co., LTD.)
* mold temperature controller (manufactured by THERMOTEQ MFG CO., LTD.)

### [Forming mold]

Fig. 4 illustrates a sectional configuration of a forming mold. The forming mold used was made of S55C and had the planar dimensions of 700 mm × 600 mm, the height of 300 mm and the clearance of 1.6 mm. The mold had a plurality of heating tubes serving as mold temperature controlling pipes placed inside, and a resin fill port in an upper mold piece.

### [Coating mold]

Fig. 5 illustrates a sectional configuration of a coating mold. The coating mold used had a cavity of 1.9 mm and otherwise had the same configuration and the same mechanism as those of the mold.

### [Base material]

* two-directional woven fabric: CO6343B manufactured by Toray Industries, Inc. (weaving yarn: carbon fiber T300-3K, weaving texture: plain weave, weight per unit area of the woven fabric: 198 g/m2, thickness: 0.25 mm, weaving density of warp thread: 12.5 threads/ 25 mm, weaving density of weft thread: 12.5 threads/ 25 mm)

### [Matrix resin]

* matrix resin: TR-C38 manufactured by Toray Industries, Inc. (glass transition temperature: 135°C (The cured matrix resin was evaluated after the matrix resin was cured at 120°C for 10 minutes.)

### [Coating resin]

* base resin: BEO-60E manufactured by New Japan Chemical Co., Ltd.
* curing agent: NBDA manufactured by Mitsui Chemicals, Inc., QX-11 manufactured by Mitsubishi Chemical Corporation, MT-PE1 manufactured by SHOWA DENKO K.K., and MH-700 manufactured by New Japan Chemical Co., Ltd.
* catalyst: HISHICOLIN PX-4ET manufactured by Nippon Chemical Industrial Co., Ltd. and Hokko TPP manufactured by HOKKO CHEMICAL INDUSTRY CO., LTD.

### [Paint]

* primer: Po. 800(NH)001 manufactured by OHASHI CHEMICAL INDUSTRIES LTD.
* clearing agent: KX28106 manufactured by NIPPON PAINT AUTOMOTIVE COATINGS CO., LTD.

### [Evaluation apparatus]

* wave scanner: Wave Scan Dual manufactured by BYK
* digital microscope: VHX-1000 manufactured by KEYENCE

### (Cutting base material)

A fiber-reinforced base material was cut according to a pattern such that the longitudinal direction was the direction of 0 degree when the direction of warp thread was 0 degree and the direction of weft thread was 90 degrees.

### (Manufacture of fiber-reinforced resin molded article)

After the temperature of the forming mold was adjusted to 120°C, six layers of the cut base material were stacked on the mold and the upper mold piece was closed. The mold was evacuated, and the matrix resin was then injected into the mold and was cured for 10 minutes. The upper mold piece was opened, and a fiber-reinforced resin molded article was taken out of the mold. The fiber-reinforced resin molded article was completed by subsequently removing the burr or the extra resin around the fiber-reinforced resin molded article with a disk grinder.

### (Manufacture of coated fiber-reinforced resin molded article)

After the temperature of the coating mold was regulated to a predetermined temperature, the fiber-reinforced resin molded article was placed on the lower mold piece and the upper mold piece was closed. The mold was then evacuated. The catalyst as appropriate was added to the curing agent at the ratio of 5 parts to 100 parts of the base resin according to each combination shown in Table 1. The base resin and the curing agent were subsequently mixed at the ratio 1:1 of the epoxy equivalent, and the resin was injected into the mold. The upper mold piece was opened, and the coated fiber-reinforced resin molded article was taken out of the mold. The coated fiber-reinforced resin molded article was completed by subsequently removing the burr or the extra resin around the coated fiber-reinforced resin molded article with a disk grinder.

### (Painting of coated fiber-reinforced resin molded article)

The coated fiber-reinforced resin molded article was painted under predetermined conditions such that the total coating thickness of the primer and the clearing agent was 30 µm.

### (Evaluation)

The coated fiber-reinforced resin molded article was evaluated for the reflected glare of a fluorescent light, Db (µm) and Da (µm) measured from the section, and the wave scan (WS) value after painting.

A sample of 2 cm square was cut from the coated fiber-reinforced resin molded article after completion of painting with a disk grinder. A section of the sample was polished with a polisher and was observed with a digital microscope (VHX-1000), and Db (µm) and Da (µm) were measured from the section. The measurement was performed at five different locations. The measurement values providing the maximum Da (µm) are shown in Table 1.

The surface of the coated fiber-reinforced resin molded article after completion of painting was measured five times using a wave scanner (Wave Scan Dual). The average value is shown in Table 1.

### (Example 1 - 4)

Each of the fiber-reinforced resin molded articles was coated with the resin and the coating conditions shown in Table 1 and was evaluated. There was a sufficient difference between the curing temperature of the matrix resin and the curing temperature of the coating resin, and the coating resin had the low curing temperature. The fluorescent light reflected on the surface was very clear without waviness. The WS values also met the class A.

### (Comparative Example 1)

The fiber-reinforced resin molded article was coated with the resin and the coating conditions shown in Table 1. The temperature of the coating resin was, however, lower than the required curing temperature of the coating resin, so that the coating resin was not sufficiently cured and the coated molded article was not removed from the mold.

### (Comparative Examples 2 and 3)

Each of the fiber-reinforced resin molded articles was coated with the resin and the coating conditions shown in Table 1 and was evaluated. There was, however, little difference between the curing temperature of the matrix resin and the curing temperature of the coating resin, and the coating resin had the high curing temperature. The fluorescent light reflected on the surface had waviness due to the cross irregularity of the molded article. The WS values did not meet the class A.

### [Table 1]

### Industrial Applicability

The manufacturing method of a coated fiber-reinforced resin molded article according to the invention is applicable to any fiber-reinforced resins that require the excellent surface quality.

### Reference Signs List

- 1: woven fabric base material
- 2: reinforcing fiber bundle (weft thread) of woven fabric base material
- 3: reinforcing fiber bundle (warp thread) of woven fabric base material
- 4: matrix resin
- 5: coating layer
- 6: thickness of entire surface layer resin corresponding to convex portion of woven fabric base material
- 7: thickness of entire surface layer resin corresponding to concave portion of woven fabric base material
- 8: surface position of coated fiber-reinforced resin molded article prior to heat shrinkage
- 9: surface position of coated fiber-reinforced resin molded article after heat shrinkage
- 10: fiber-reinforced resin molded article
- 11: mold
- 12: mold seal
- 13: matrix resin injector
- 14: matrix resin injection passage open-close mechanism
- 15: matrix resin injection passage
- 16: mold temperature controller
- 17: heat medium passage
- 18: mold
- 19: coating layer-forming resin material ejection device
- 20: coating layer-forming resin material injection passage open-close mechanism
- 21: coating layer-forming resin material injection passage
- 22: amount of surface irregularity (Db) of coated fiber-reinforced resin molded article
- 23: amount of surface irregularity (Da) of fiber-reinforced resin molded article
- 24: void portion

## Claims

1. A manufacturing method of a coated fiber-reinforced resin molded article, comprising:
a first molding process that cures a matrix resin (4) which a reinforcing fiber is impregnated with at a temperature T1(°C) to obtain a fiber-reinforced resin molded article (10); and
a second molding process that injects a coating layer-forming resin material into a cavity to coat at least part of a surface layer of the fiber-reinforced resin molded article (10) and cures the coating layer-forming resin material at a temperature T2(°C) that is lower than the temperature T1(°C), so as to obtain the coated fiber-reinforced resin molded article,
wherein a difference between the temperature T1(°C) and the temperature T2(°C) is equal to or greater than 30°C,
wherein for the second molding process the fiber-reinforced resin molded article (10) is placed in the cavity of a mold (18), and the cavity is set to the temperature T2(°C) that is lower than the temperature T1(°C), and the coating layer-forming resin material is injected in form of a liquid coating layer-forming resin material into the cavity, and
wherein the mold (18) is comprised of at least two pieces and has the cavity in a shape that is approximately same as a shape of the fiber-reinforced resin molded article (10).

2. The manufacturing method of the coated fiber-reinforced resin molded article according to claim 1,
wherein the first molding process and the second molding process are performed using different molds (18).

3. The manufacturing method of the coated fiber-reinforced resin molded article according to claim 2,
wherein the temperature T2(°C) is lower than 80°C.

4. The manufacturing method of the coated fiber-reinforced resin molded article according to claim 2 or 3,
wherein the matrix resin (4) is a thermosetting resin.

5. The manufacturing method of the coated fiber-reinforced resin molded article according to any one of claims 2 to 4,
wherein the coating layer-forming resin material is a thermosetting resin.

6. The manufacturing method of the coated fiber-reinforced resin molded article according to any one of claims 2 to 5,
wherein the coating layer (5) has a thickness in a range of 50 µm to 600 µm.

## Patentansprüche

1. Herstellungsverfahren für einen beschichteten, faserverstärkten Harzformkörper, umfassend:
einen ersten Formprozess, der ein Matrixharz (4), mit dem eine verstärkende Faser imprägniert ist, bei einer Temperatur T1(°C) härtet, um einen faserverstärkten Harzformkörper (10) zu erhalten; und
einen zweiten Formprozess, der ein Überzugsschicht formendes Harzmaterial in einen Hohlraum injiziert, um mindestens einen Abschnitt einer Oberflächenschicht des faserverstärkten Harzformkörpers (10) zu beschichten, und das Überzugsschicht formende Harzmaterial bei einer Temperatur T2(°C) härtet, die niedriger ist als die Temperatur T1(°C), sodass der beschichtete faserverstärkte Harzformkörper erhalten wird,
wobei eine Differenz zwischen der Temperatur T1(°C) und der Temperatur T2(°C) gleich oder größer ist als 30°C,
wobei für den zweiten Formprozess der faserverstärkte Harzformkörper (10) in den Hohlraum einer Form (18) angeordnet wird und der Hohlraum auf die Temperatur T2(°C) eingestellt wird, die niedriger ist als die Temperatur T1(°C), und das Überzugsschicht formende Harzmaterial in Form eines flüssigen, Überzugsschicht formenden Harzmaterials in den Hohlraum injiziert wird, und
wobei die Form (18) mindestens zwei Abschnitte aufweist und den Hohlraum in einer Form aufweist, die ungefähr mit der Form des faserverstärkten Harzformkörpers (10) übereinstimmt.

2. Herstellungsverfahren für den beschichteten, faserverstärkten Harzformkörper nach Anspruch 1,
wobei der erste Formprozess und der zweite Formprozess unter Verwendung unterschiedlicher Formen (18) durchgeführt werden.

3. Herstellungsverfahren für den beschichteten, faserverstärkten Harzformartikel nach Anspruch 2,
wobei die Temperatur T2 (°C) niedriger ist als 80°C.

4. Herstellungsverfahren für den beschichteten, faserverstärkten Harzformkörper nach Anspruch 2 oder 3,
wobei das Matrixharz (4) ein duroplastisches Harz ist.

5. Herstellungsverfahren für den beschichteten, faserverstärkten Harzformkörper nach einem der Ansprüche 2 bis 4,
wobei das Überzugsschicht formende Harzmaterial ein duroplastisches Harz ist.

6. Herstellungsverfahren für den beschichteten, faserverstärkten Harzformkörper nach einem der Ansprüche 2 bis 5,
wobei die Überzugsschicht (5) eine Dicke im Bereich von 50 µm bis 600 µm aufweist.

## Revendications

1. Procédé de fabrication d'un article moulé en résine renforcée de fibres revêtu, comprenant :
un premier procédé de moulage qui durcit une résine matricielle (4) dont une fibre de renforcement est imprégnée à une température T1(°C) pour obtenir un article moulé en résine renforcée de fibres (10) ; et
un deuxième procédé de moulage qui injecte un matériau de résine de formation de couche de revêtement dans une cavité pour revêtir au moins une partie d'une couche de surface de l'article moulé en résine renforcée de fibres (10) et durcit le matériau de résine de formation de couche de revêtement à une température T2(°C) qui est inférieure à la température T1(°C), de manière à obtenir l'article moulé en résine renforcée de fibres revêtu,
dans lequel une différence entre la température T1(°C) et la température T2(°C) est supérieure ou égale à 30°C,
dans lequel, pour le deuxième procédé de moulage, l'article moulé en résine renforcée de fibres (10) est placé dans la cavité d'un moule (18), et la cavité est réglée à la température T2(°C) qui est inférieure à la température T1(°C), et le matériau de résine de formation de couche de revêtement est injecté sous la forme d'un matériau de résine de formation de couche de revêtement liquide dans la cavité, et
dans lequel le moule (18) est composé d'au moins deux pièces et dont la cavité a une forme qui est approximativement la même que la forme de l'article moulé en résine renforcée de fibres (10).

2. Procédé de fabrication de l'article moulé en résine renforcée de fibres revêtu selon la revendication 1,
dans lequel le premier procédé de moulage et le deuxième procédé de moulage sont exécutés en utilisant des moules différents (18).

3. Procédé de fabrication de l'article moulé en résine renforcée de fibres revêtu selon la revendication 2,
dans lequel la température T2(°C) est inférieure à 80°C.

4. Procédé de fabrication de l'article moulé en résine renforcée de fibres revêtu selon la revendication 2 ou 3,
dans lequel la résine matricielle (4) est une résine thermodurcissable.

5. Procédé de fabrication de l'article moulé en résine renforcée de fibres revêtu selon l'une quelconque des revendications 2 à 4,
dans lequel le matériau de résine de formation de couche de revêtement est une résine thermodurcissable.

6. Procédé de fabrication de l'article moulé en résine renforcée de fibres revêtu selon l'une quelconque des revendications 2 à 5,
dans lequel la couche de revêtement (5) a une épaisseur comprise dans une plage allant de 50 µm à 600 µm.
